# EUROPÄISCHE PATENTANMELDUNG

(11) **EP 1 586 501 A1**
(43) Veröffentlichungstag der Anmeldung: **19.10.2005**
(21) Anmeldenummer: 05008370.8
(22) Anmeldetag: 18.04.2005
(51) Int. Cl.: B64C 1/40

(54) **Beschichtung von Innenverkleidung in Passagierflugzeugen**

(30) Priorität: 17.04.2004 DE 102004018737; 02.09.2004 US 606645 P
(71) Anmelder: Airbus Deutschland GmbH, 21129 Hamburg (DE)
(72) Erfinder: Busch, Heinz-Peter, 28844 Weyhe (DE); Niedzwiedzki, Georg, 28195 Bremen (DE)
(74) Vertreter: Maiwald Patentanwalts GmbH

(57) **Zusammenfassung**

Die Erfindung betrifft eine Anordnung zur Beschichtung von Innenverkleidungsteilen (3) in Passagierflugzeugen unter Einhaltung von einschlägigen Brandschutznormen und gleichzeitiger Verbesserung des thermischen Komforts mit einem eine Transparenzschicht (7) und weitere Funktionsschichten aufweisenden Schichtaufbau (9), wobei der Schichtaufbau (9) auf die Innenverkleidungsteile (3), insbesondere die dem Passagier zugewandte Seite der Raumwand, aufbringbar ist.

Erfindungsgemäß ist auf die Transparenzschicht (7) zumindest bereichsweise eine vom Innenraum einer Kabine (1) des Passagierflugzeuges weggerichtete rückseitige Beschichtung (8) aufgebracht.

Infolge der rückseitigen Beschichtung (8) der Transparenzschicht (7) erhöht sich der thermische Komfort für Fluggäste (2), die sich in Fensterbereichen der Kabine (1) aufhaften. Daneben ermöglicht die rückseitige Beschichtung (8) die Einhaltung der einschlägigen Brandschutznormen auch bei einer Verwendung von, im Verhältnis zu PVF- und/oder PVDF-Folien preiswerteren Folien aus Polyolephinen, beispielsweise Polyethylen- öder Polypropylenfolien, zur Bildung der Transparenzschicht (7) mit der rückseitigen Beschichtung (8). Darüber hinaus dient die Aufbringung des Schichtaufbaus (9) auf die Innenverkleidungsteile (3) - einschließlich der Transparenzschicht (7) - auch dekorativen, gestalterischen Zwecken.

## Beschreibung

Die Erfindung betrifft eine Anordnung zur Beschichtung von Innenverkleidungsteilen in Passagierflugzeugen unter Einhaltung von einschlägigen Brandschutznormen und Gleichzeitiger Verbesserung des thermischen Komforts mit einem eine Transparenzschicht und weitere Funktionsschichten aufweisenden Schichtaufbau, wobei der Schichtaufbau auf die Innenverkleidungsteile aufbringbar ist.

Beschichtungen an Innenverkleidungsteilen in Passagierflugzeugen zur Erhöhung des thermischen Komforts sind aus dem Stand der Technik bekannt. Es handelt sich hierbei um auf Innenverkleidungsteile der Passagierkabine aufgebrachte Beschichtungen mit geringer Materialstärke. Die Beschichtung ist hierzu auf der zum Innenraum der Passagierkabine weisenden Oberfläche der Innenverkleidungsteile aufgebracht, insbesondere aufgedampft.

Die auf die Innenverkleidungsteile aufgebrachte Beschichtung weist in einer besonders bevorzugten Ausführungsform einen geringen thermischen Emissionskoeffizienten ε auf, sodass ein möglichst großer Anteil der von einem Passagier ausgesendeten Strahlung, insbesondere der auftreffenden Infrarotstrahlung, von der Beschichtung in die Kabine des Passagierflugzeuges zurück reflektiert Wird. Der Emissionskoeffizient der Beschichtung ist hierbei vorzugsweise kleiner als 0,5, sodass mehr als 50% der auftreffenden Infrarotstrahlung in den Innenraum der Passagierflugzeugkabine zurück reflektiert wird.

Die von den in der Nähe der Innenverkleidungsteile sitzenden Personen abgegebene Wärmestrahlung wird somit von der Beschichtung in den Innenraum des Passagierflugzeuges zurück geworfen. Infolge der reflektierten Infrarotstrahlung verringert sich bei Personen, die sich in der Nähe der Innenverkleidungsteile - insbesondere auf den fensternahen Sitzen der Passagierkabine - aufhalten, die Wärmeabgabe des Körpers, wodurch eine Auskühlung weitgehend vermieden und das thermische Empfinden des Fluggastes verbessert wird. Das insbesondere bei Langstreckenflügen in der Nähe der Innenverkleidungsteile im Fensterbereich auftretende Phänomen des Kälteempfindens der dort sitzenden Fluggäste wird durch die reflektierende Beschichtung abgemildert, ohne dass sich hierdurch die Oberflächentemperatur der Innenverkleidungsteile selbst signifikant ändert.

Bei der Beschichtung kann es sich beispielsweise um Metalloxide, insbesondere um Indium-Zinn-Oxid handeln. Eingesetzt werden aber auch Silberverbindungen und dergleichen. Auch ist eine rein metallische Beschichtung, beispielsweise Gold oder Silber denkbar.

Die bekannten Beschichtungen weisen in der Regel eine Dicke von weniger als 1 µm auf. Die Beschichtung kann entweder direkt auf die Innenverkleidungsteile und/oder die Fensterflächen oder auf eine Trägerfolie aufgebracht werden. Weiterhin können auf den Innenverkleidungsteilen und/oder den Fensterflächen weitere Kunststofffolien, beispielsweise zu Dekorationszwecken, zu Schutzzwecken oder dergleichen aufgebracht sein. Aufgrund der geringen Schichtdicken von unter 1 µm sind etwaige, hinter der beschichteten Trägerfolie angeordnete Kunststofffolien, beispielsweise Farbgebungsfolien oder unmittelbar eingefärbte Innenverkleidungsteile, weiterhin gut sichtbar.

Daneben ist es erforderlich, dass einschlägige Brandschutznormen im Bereich der zivilen Passagierluftfahrt eingehalten werden. Dies bedeutet, dass die Innenverkleidungsteile sowie die etwaig aufgebrachten Kunststofffolien im Brandfall nur ein definiertes und begrenztes Maß an Wärmeenergie (so genannter maximaler "Heat-Release-Wert") abgeben dürfen.

Aufgrund der geringen Dicke der eingesetzten Beschichtungen zur Erhöhung des thermischen Komforts, deren chemischer Zusammensetzung sowie des Umstandes, dass diese Beschichtungen auf den Oberseiten der Innenverkleidungsteile aufgebracht werden, ergibt sich eine geringe Haltbarkeit der bekannten Beschichtungen bzw. Schichtaufbauten. Insbesondere sind die bekannten, auf den Oberseiten der Innenverkleidungsteile aufgebrachten Beschichtungen nicht resistent gegen Handschweiß sowie zusätzliche mechanische Beeinträchtigungen, wie sie beispielsweise durch die Anwendung von Reinigungsgerätschaften auf den Oberflächen der Innenverkleidungsteile entstehen.

Damit sind die vorbekannten, auf die Oberseiten der Innenverkleidungsteile von Passagierflugzeugkabinen aufgebrachten Beschichtungen zur Steigerung des thermischen Komforts in Passagierflugzeugkabinen nur bedingt für den praktischen Dauereinsatz geeignet.

Aufgabe der Erfindung ist die Bereitstellung einer Anordnung zur Dekorierung von Innenverkleidungsteilen in Passagierflugzeugen unter Einhaltung der einschlägigen Brandschutznormen und Inservicetauglichkeit bei einer gleichzeitigen Verbesserung des thermischen Komforts und geringen Herstellungskosten.

Diese Aufgabe wird durch eine Anordnung mit den Merkmalen des Patentanspruchs 1 gelöst.

Dadurch, dass nach Maßgabe der Merkmale des Patentanspruchs 1 auf die Transparenzschicht zumindest bereichsweise eine vom Innenraum einer Kabine des Passagierflugzeuges weggerichtete rückseitige Beschichtung aufgebracht ist, ist eine hohe Abriebfestigkeit Und damit Haltbarkeit der Beschichtung bei gleichzeitiger Erhöhung des thermischen Komforts und der Einhaltung der einschlägigen Brandschutzvorschriften bei geringen Herstellungskosten gegeben.

Dadurch, dass die Transparenzschicht zumindest für Infrarotstrahlung durchlässig ist, ist eine Anbringung der wärmereflektierenden Beschichtung auf der Rückseite der Transparenzschicht möglich. Hieraus folgt die besondere Haltbarkeit und Resistenz der Beschichtung gegen äußere Umwelteinflüsse, weil diese beispielsweise nicht mehr durch Handschweiß und/oder Reinigungsvorgänge beschädigt werden kann.

Dadurch, dass die rückseitige Beschichtung der Transparenzschicht durch eine Metallbeschichtung, beispielsweise eine leitfähige Metalloxid-Beschichtung und/oder Metallbeschichtung mit einer Dicke von weniger als 2 µm gebildet ist, wird eine ausreichende Reflexion der von Personen im Fensterbereich abgegebenen Wärmestrahlung in den Innenraum des Passagierflugzeuges gewährleistet. Gleichzeitig ist die Metall- und/oder Metalloxid-Beschichtung aufgrund ihrer geringen Dicke optisch mit dem bloßen Auge nicht wahrnehmbar. Weitere, hinter der Transparenzschicht mit der rückseitigen Beschichtung angeordnete Funktionsschichten, beispielsweise eine Farbgebungsschicht in Form einer durchgefärbten Kunstsfofffolie oder dergleichen, bleiben durch die Beschichtung von Außen hindurch sichtbar, sodass der ästhetische Gesamteindruck der Dekoration des Innenverkleidungsteils nicht beeinträchtigt wird.

Nach einer weiteren vorteilhaften Ausgestaltung der Anordnung ist die Transparenzschicht durch eine vorzugsweise polyolephine Kunststofffolie, insbesondere durch eine Polypropylen- oder eine Polyethylenfolie gebildet. Hierdurch ergibt sich zum einen der besondere Vorteil der erfindungsgemäßen Anordnung, dass die Transparenzschicht für auftreffende Infrarotstrahlung durchlässig ist, sodass die besonders haftbare Anordnung der wärmereflektierenden Schicht auf der Rückseite der Transparenzsehicht - also auf der vom Innenraum des Passagierflugzeuges weggerichteten Seite - möglich wird. Zum anderen ist infolge der rückwärtigen Beschichtung die Verwendung der im Vergleich zu PVF (Polyvinylfluorid) -Folien und/oder PVDF (Polyvinylidenfluorid) -Folien preiswerteren Polypropylen- oder Polyethylenfolien möglich, obwohl mit diesen Folien bislang die einschlägigen Brandschutznormen im zivilen Passagierflugzeugbau nicht eingehalten werden konnten. Infolge der rückseitigen Metall-und/oder Metalloxid-Beschiehtung der Polypropylen-oder Polyethylenfolie verringert sich jedoch - wie in langen Versuchsreihen in einer dem Innenraum einer Passagierflugzeugkabine nachgebildeten Messkabine in überraschender Weise gefunden wurde - im Brandfall der Wärmeeintrag in die Folie durch die Reflexion der Infrarotstrahlung so weit, dass die zur Einhaltung der Brandschutznormen maximal zulässigen Heat-Release-Werte von 65 kW·min/m² selbst bei Verwendung von Polyethylen- und/oder Polypropylenfolien zur Bildung der Transparenzschicht - geprüft im Verbund mit einem bauteilrepräsentativen Aufbau - eingehalten werden kann.

Mittels der erfindungsgemäßen Anordnung ist daher die Steigerung des thermischen Komforts in Fenster- und/oder Randbereichen von Passagierflugzeugkabinen bei gleichzeitiger Einhaltung der einschlägigen Brandschutznormen und dem Einsatz preiswerterer Polypropylen- oder Polyethylenfolien möglich. Daneben ist die Beschichtung zur Erhöhung des thermischen Komforts aufgrund deren rückseitiger Aufbringung auf die Transparenzschicht extrem langlebig und haltbar, sodass die erfindungsgemäße Anordnung einsetzbar und für den Serieneinsatz reif ist. Als Nebeneffekt ermöglicht die erfindungsgemäße Anordnung auch noch die Dekorierung von Innenverkleidungsteilen von Passagierflugzeugen, beispielsweise durch zusätzliche Funktionsschichten, wie zum Beispiel durch Farbgebungs-, Struktur-, und Trägerschichten etc. Aber auch die Transparenzschicht erhöht für sich genommen die ästhetische Wirkung des betreffenden Innenverkleidungsteils durch Glanzbildung.

Weitere vorteilhafte Ausgestaltungen der Anordnung sind in den weiteren Patentansprüchen dargelegt.

### In der Zeichnung zeigt:

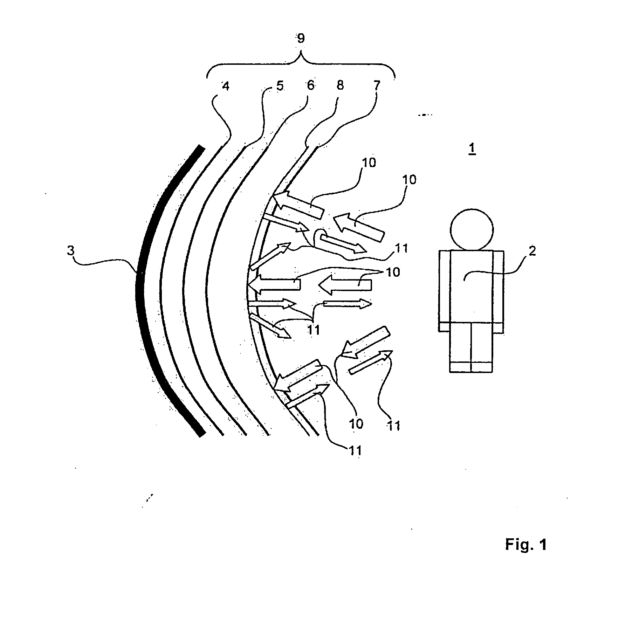

- **Fig. 1**: Eine schematische Querschnittsdarstellung eines mit der erfindungs-gemäßen Anordnung versehenen Innenverkleidungsteils eines Passa-gierflugzeuges.

Die **Fig. 1** zeigt ein Ausführungsbeispiel der erfindungsgemäßen Anordnung. Innerhalb des Innenraums einer Kabine 1 eines Passagierflugzeuges befindet sich ein sitzender Fluggast 2. Die Innenwandung der Passagierkabine 1 ist im gezeigten Ausführungsbeispiel mit einem Innenverkleidungsteil 3 versehen.

Das Innenverkleidungsteil 3 ist im gezeigten Ausführungsbeispiel der Fig.1 mit der erfindungsgemäßen Anordnung versehen.

Die Anordnung umfasst hierbei eine Klebstoffschicht 4, eine Trägerschicht 5, eine Farbgebungsschicht 6 sowie eine Transparenzschicht 7. Als Material zur Bildung der Klebstoffschicht 4, der Trägerschicht 5 sowie der Farbgebungsschicht 6 kommen beispielsweise Kunststofffolien aus Polvinylfluorid (PVF), Polyvinylidenflorid (PVDF) oder anderen Kunststoffen in Betracht. Die Klebstoffschicht 4 dient insbesondere zur mechanischen Fixierung der Anordnung auf dem Innenverkleidungsteil 3. Die Trägerschicht 5 dient insbesondere zur mechanischen Stabilisierung des gesamten Folienaufbaus der Anordnung, im speziellen der farbgebenden Schicht, kann beispielsweise aber auch Strukturen, Texturen, Ausprägungen und dergleichen zu dekorativen Zwecken aufweisen. Die Farbgebungsschicht 6 erfüllt vorwiegend dekorative Aufgaben, indem sie beispielsweise dem Innenverkleidungsteil 3 einen definierten Farbton oder Farbmuster zur Innenraumgestaltung des Passagierflugzeuges verleiht. Darüber hinaus kann die Farbgebungsschicht 6 auch Strukturen, Texturen und dergleichen zur dekorativen Oberflächengestaltung enthalten. Die Transparenzschicht 7 erhöht schließlich den ästhetischen Gesamteindruck, indem sie der Oberftäche des Innenerkleidungsteils 3 zusätzlich definierten Glanz verleiht.

Die Rückseite der Transparenzschicht 7 ist mit einer rückseitigen Beschichtung 8 versehen. Die Transparenzschicht 7 ist beispielsviveise aus einer Kunststofffolie, insbesondere einer Polyethylen- und/oder Polypropylenfolie gebildef, da Kunststofffolien aus Polyblephihen insbesondere für Infrarotstrahlung durchlässig sind. Die rückseitige Beschichtung 8 besteht aus einer metallischen Beschichtung und/oder einer Metalloxid-Beschichtung, beispielsweise Indium-Zinn-Oxid oder anderen Metalloxiden. In vorteilhafter Weise können auch Silberverbindungen zur Bildung der Beschichtung 8 verwendet werden.

Die Beschichtung 8 weist in einer vorteilhaften Ausführung einen thermischen Emissionskoeffizienten ε von weniger als 0,5 auf. In einer besonders bevorzugten Ausführungsvariante weist die Beschichtung 8 einen thermischen Emissionskoeffizienten zwischen 0,1 und 0,3 auf, sodass mehr als 50% der auftreffenden Infrarotstrahlung von der Beschichtung 8 wieder in den Innenraum 1 der Kabine zurück reflektiert werden. Die Materialstärke der Beschichtung 8 beträgt vorzugsweise weniger als 1 µm, sodass die Beschichtung 8 vom menschlichen Auge nicht wahrgenommen wird und eine Beeinträchtigung infolge einer Abdeckung der Farbgebungsschicht 6 nicht erfolgt. Zur Aufbringung dieser geringen Schichtdicken wird die Beschichtung in besonders vorteilhafter Weise im Vakuum auf die Rückseite der die Transparenzschicht 7 bildenden Folie aus Polyolephinen, beispielsweise eine Polyethylen- oder Polypropylenfolie, aufgedampft. Die Transparenzschicht 7 weist hierbei eine Dicke von vorzugsweise weniger als 40 µm auf, um die strengen Brandschutznormen im Passagierflugzeugbau zu erfüllen.

Die Klebstoffschicht 4, die Trägerschicht 5, die Farbgebungsschicht 6 sowie die Transparenzschicht 7 mit der rückseitig aufgebrachten Beschichtung 8 sind fest aufeinander kaschiert und mit dem Innenverkleidungsteil 3 verbunden und bilden zusammen einen Schichtaufbau 9 der erfindungsgemäßen Anordnung. Selbstverständlich ist in einem alternativen, nicht in der Fig. 1 dargestellten Ausführungsbeispiel auch nur eine bereichsweise Positionierung der Anordnung auf dem Innenverkleidungsteil 3 möglich. Weiterhin kann die erfindungsgemäße Anordnung auch zur Beschichtung von Fensteiflächen verwendet werden. In diesem Fall müssen möglicherweise die Farbgebungsschicht 6 sowie die Trägerschicht 5 innerhalb des Schichtaufbaus der Anordnung-Zumindest in den Fensterbereichen - partiell weggelassen werden.

Die vorn Fluggast 2 abgegebene Wärmestrahlung 10 dringt nahezu verlustfrei durch die Transparenzschicht 7 hindurch und wird anschließend von der Beschichtung 8 größtenteils in den Passagierraum reflektiert. Die von der Beschichtung 8 reflektierte Wärmestrahlung 11 trifft wiederum auf den Fluggast 2 auf. Diese reflektierte Wärmestrahlung 11 erniedrigt den Wärmeverlust des Fluggastes 2 infolge Absorption, sodass dessen thermisches Empfinden vorteilhaft beeinflusst wird. Damit steigt der thermische Komfort im Innenraum der Kabine 1, insbesondere in den Fensterbereichen und/oder in der Nähe der Innenverkleidungsteile 3. Das auf Langstreckenflügen vom Fluggast 2 häufig als unangenehm empfundene Auskühlen, insbesondere in der Nähe der Innenverkleidungsteile 3 und/oder der Fensterflächen wird durch die Beschichtung 8 deutlich verringert, dass heißt, es wird eine höhere Komfortstufe erreicht.

Gleichzeitig befindet sich die rückseitige Beschichtung 8 erfindungsgemäß gut geschützt vor äußeren Umwelteinflüssen hinter der Transparenzschicht 7 - auf der vom Innenraum der Kabine 1 weggerichteten Seite der Transparenzschicht 7 -, sodass beispielsweise Handschweiß, der einen pH-Wert von unter 6,5 aufweist, oder mechanische Reinigungsarbeiten keine schädigende Wirkung für die Beschichtung 8 mehr entfalten können.

Darüber hinaus ermöglicht die erfindungsgemäße Anordnung der Beschichtung 8 unterhalb der Transparenzschicht 7 die Verwendung der im Vergleich zu PVF-Folien oder PVDF-Folien deutlich preiswerteren Folien aus Polyolephinen, beispielsweise Polyethylen- oder Polypropylenfolien, zur Bildung der Transparenzschicht 7. Infolge der rückseitig auf die Transparenzschicht 7 aufgebrachten Beschichtung 8 wird im Brandfall die auftreffende Infrarotstrahlung in den Innenraum der Kabine 1 zurückgeworfen, sodass sich ein Entzünden des Bauteils vertangsamt und die so genannten zulässigen maximalen Heat-Release-Werte des Bauteils von 65 kW-min/m² nach Maßgabe der einschlägigen Brandschutznormen nicht überschritten werden. Ohne die Aufbringung der Beschichtung 8 wäre der maximale Peak-Heat-Release-Wert von 65 kW/m² und das Integral der "Zweiminuten" Heat-Release-Rate von 65 kW·min/m² mit den bekannten Folien aus Polyolephinen, auch bei einer Materialstärke unterhalb von 40 Mikrometer nicht einzuhalten.

Im Zuge konkreter Messungen an mit einer Beschichtung aus Indium-Zinnoxid versehenen Polypropylenfolien auf einem repräsentativen Innenverkleidungsteil in der Messkabine haben sich unerwartet geringe Heat-Release-Werte von ungefähr 47 kW/m² bei einer Folienstärke von 20 und 30 µm ergeben. Die thermischen Emissionskoeffizienten ε lagen hierbei jeweils bei etwa 0,35. Diese Messergebnisse lagen in demselben Bereich, der bislang nur mit entsprechend beschichteten, teureren PVF- bzw. PVDF-Folien erzielbar war.

Mittels der erfindungsgemäßen Anordnung ist daher die dekorative Gestaltung von Innenverkleidungsteilen 3 bei gleichzeitiger Einhaltung der einschlägigen Brandschutznormen sowie der Verwendung kostengünstiger Folien aus Polyolephinen, beispielsweise Pölyethylen- oder Polypropylenfolien, bei gleichzeitiger Erhöhung des thermischen Komforts im Innenbereich der Kabine 1 von Passagierflugzeugen möglich.

Bezugszeichenliste
- 1: Kabine
- 2: Fluggast
- 3: Innenverkleidungsteil
- 4: Klebstoffschicht
- 5: Trägerschicht
- 6: Farbgebungsschicht
- 7: Transparenzschicht
- 8: Beschichtung
- 9: Schichtaufbau
- 10: abgegebene Wärmestrahlung
- 11: reflektierte Wärmestrahlung

## Patentansprüche

1. Anordnung zur Beschichtung von Innenverkleidungsteilen (3) in Passagierflugzeugen unter Einhaltung von einschlägigen Brandschutznormen und gleichzeitiger Verbesserung des thermischen Komforts mit einem eine Transparenzschicht (7) und weitere Funktionsschichten aufweisenden Schichtaufbau (9), wobei der Schichtaufbau (9) auf.die Innenverkleidungsteile (3) aufbringbar ist, **dadurch gekennzeichnet, dass** auf die Transparenzschicht (7) zumindest bereichsweise eine vom Innenraum einer Kabine (1) des Passagierflugzeuges weggerichtete rückseitige Beschichtung (8) aufgebracht ist.

2. Anordnung nach Anspruch 1, **dadurch gekennzeichnet, dass** die Transparenzschicht (7) zumindest bereichsweise für Infrarotstrahlung durchlässig ist.

3. Anordnung nach Anspruch 1 oder 2, **dadurch gekennzeichnet, dass** die rückseitige Beschichtung (8) der Transparenzschicht (7) durch eine Metall- und/oder Metalloxid-Beschichtung, insbesondere eine. Indium-Zinn-Oxid-Beschichtung, gebildet ist und die rückseitige Beschichtung (8) eine Dicke von weniger als 2 µm aufweist.

4. Anordnung nach einem der Ansprüche 1 bis 3, **dadurch gekennzeichnet, dass** die Transparenzschicht (7) infolge der rückseitigen Beschichtung (8) maximale Heat-Release-Werte von weniger als 65 kW·min/m² bei einer mit einer PVF (Polyvinylfluorid) -oder PVDF (Polyvinylidenfluorid) -Folie vergleichbaren Dicke aufweist.

5. Anordnung nach einem der Ansprüche 1 bis 4, **dadurch gekennzeichnet, dass** die Transparenzschicht (7) eine Dicke von weniger als 60 µm aufweist.

6. Anordnung nach einem der Ansprüche 1 bis 5, **dadurch** gekenrizeichnet, dass die rückseitige Beschichtung (8) mindestens die Hälfte einer von einem Fluggast (2) in Richtung des Schichtaufbaus (9) abgegebenen Wärmestrahlung (10) in der Form einer reflektierten Wärmestrahlung (11) in die Kabine (1) des Passagierflugzeuges zurückreflektiert.

7. Anordnung nach einem der Ansprüche 1 bis 6, **dadurch gekennzeichnet, dass** die Transparenzschicht (7) durch eine polyolephine Kunststofffolie, insbesondere eine Polypropylen- oder eine Polyethylenfolie, gebildet ist.

8. Anordnung nach einem der Ansprüche 1 bis 7, **dadurch gekennzeichnet, dass** die weiteren Funktionsschichten des Schichtaufbaus (9) durch mindestens eine Trägerschicht (5) und eine Farbgebungsschicht (6) gebildet sind.

9. Anordnung nach einem der Ansprüche 1 bis 8, **dadurch gekennzeichnet, dass** der Schichtaufbau eine Klebstoffschicht (4) aufweist.

10. Anordnung nach einem der Ansprüche 1 bis 9, **dadurch gekennzeichnet, dass** die Klebstoffschicht (4), die Trägerschicht (5) sowie die Farbgebungsschicht (6) aus Kunststofffolien gebildet sind, die vorzugsweise vollflächig miteinander verbunden sind, und die die Transparenzschicht (7) bildende polyolephine Kunststofffolie mit der Farbgebungsschicht (6) vorzugsweise vollflächig verbunden ist.
